# EUROPÄISCHE PATENTSCHRIFT

(11) **EP 2 984 747 B1**
(45) Veröffentlichungstag und Bekanntmachung des Hinweises auf die Patenterteilung: **15.11.2017**
(21) Anmeldenummer: 14728476.4
(22) Anmeldetag: 21.05.2014
(51) Int. Cl.: H02N 2/04

(54) **VORRICHTUNG UND VERFAHREN ZUM ANHEBEN VON OBJEKTEN**
DEVICE AND METHOD FOR LIFTING OBJECTS
DISPOSITIF ET PROCÉDÉ POUR SOULEVER DES OBJETS

(30) Priorität: 17.06.2013 DE 102013211289
(43) Veröffentlichungstag der Anmeldung: 17.02.2016
(73) Patentinhaber: Siemens Aktiengesellschaft, 80333 München (DE)
(72) Erfinder: GERHARD, Detlef, 81829 München (DE); RENNER, Martin, 82008 Unterhaching (DE)
(86) Internationale Anmeldenummer: PCT/EP2014/060387
(87) Internationale Veröffentlichungsnummer: WO 2014/202315

(56) Entgegenhaltungen:
- GB-A- 2 087 659
- US-A- 5 055 733

## Beschreibung

Die vorliegende Erfindung betrifft eine Vorrichtung und ein Verfahren zum Bewegen eines Objektes in einer vertikalen Richtung.

Zum Anheben und relativ genauen Positionieren von Lastern, wie beispielsweise eines Chucks, werden Antriebe verwendet, die die Last oder das Objekt schnell und genau positionieren sollen.

Herkömmlicherweise wurden Spindelantriebe und speziell für geringere Lasten Piezoantriebe mit Gelenkübersetzung verwendet. Für Positionierbewegungen sind als interner Stand der Technik erste Piezoantriebe mit hydraulischer Hubübersetzung bekannt. Intern wurden bereits mehrstufige hydraulische Übersetzungen verwendet, wobei für das Anheben der Objekte mehrere Antriebe parallel geschaltet wurden, um so die Objektmasse entsprechend schnell positionieren zu können. Dieser interne Stand der Technik hat allerdings den Nachteil, dass die einzelnen Antriebe genau aufeinander abgestimmt werden müssen. Ein weiterer Nachteil besteht darin, dass ebenso bei genauer Justage aufgrund von Fertigungstoleranzen ein gleichmäßiger Hub der parallel geschalteten Piezo-Hydrauliksysteme lediglich sehr schwer zu realisieren ist.

Die US 5,055,733 A offenbart ein Verfahren zur Umwandlung von Mikro-Bewegungen in Makro-Bewegungen sowie eine das Verfahren ausführende Vorrichtung mit einer Vielzahl von piezoelektrischen Bauteilen mit wirkenden Oberflächenbereichen.

Die Aufgabe der vorliegenden Erfindung ist es, eine Vorrichtung und ein Verfahren zum Bewegen eines Objektes in einer vertikalen Richtung, insbesondere entgegen der Schwerkraftrichtung, derart bereitzustellen, dass Objekte schnell mit einem kleinen Hub und genau angehoben werden können. Beispielsweise sollen Massen im Bereich von 50 g bis 1000 g im ms-Bereich mit großer Positioniergenauigkeit angehoben werden können. Beispielsweise sollen Objekte mit einer Masse im Bereich von 100 g bis 1000 g in ca. 5 ms um etwa 0,5 bis 5 mm mit einer Positioniergenauigkeit von besser 10 µm angehoben werden können. Insbesondere soll die Justierung der Vorrichtung einfach und eine Wahrscheinlichkeit von Verkippungen des Objektes wirksam reduziert sein.

Die Aufgabe wird durch eine Vorrichtung gemäß dem Hauptanspruch und ein Verfahren gemäß dem Nebenanspruch gelöst.

Gemäß einem ersten Aspekt wird eine Vorrichtung zum Bewegen eines Objektes in einer vertikalen Richtung beansprucht, aufweisend eine Mehrzahl von bei einer Aktivierung in Richtungen sich ausdehnenden und dabei an einer Wirkseite Druckkräfte erzeugenden Piezoaktoren und eine hydraulische Übersetzungseinrichtung, die die Druckkräfte der Piezoaktoren in eine vertikale Druckkraft zum Bewegen des Objektes entgegen der Schwerkraftrichtung wandelt und mit einem Übersetzungsverhältnis übersetzt.

Ein Übersetzungsverhältnis gibt einen Faktor an, mit dem die Druckkräfte in eine vertikale Druckkraft umgewandelt werden. Dieser Faktor ergibt sich beispielsweise aus einem Quotienten, einer Ausgangsquerschnittsfläche durch eine Eingangsquerschnittsfläche.

Gemäß einem zweiten Aspekt wird ein Verfahren zum Bewegen eines Objektes in einer vertikalen Richtung mit den Schritten Aktivieren einer Mehrzahl von Richtungen sich ausdehnenden und dabei an einer Wirkseite Druckkräfte erzeugenden Piezoaktoren und Bewegen des Objektes entgegen der Schwerkraftrichtung mittels Wandeln und Übersetzen der Druckkräfte der Piezoaktoren in eine vertikale Druckkraft mittels einer hydraulischen Übersetzungseinrichtung.

Es erfolgt eine Nutzung von Piezoaktoren mit mindestens einer einstufigen hydraulischen Hubübersetzung. Mittels eines erfindungsgemäßen Verfahrens wird der Hub mehrerer Piezoaktoren über eine gemeinsame Hydraulik auf das Objekt gegeben, um so das Objekt anzuheben. Erfindungsgemäß erfolgt die Nutzung mehrerer Piezoaktoren, welche beliebig miteinander kombiniert werden können und gemeinsam eine hydraulische Hubübersetzung nutzen.

Weitere vorteilhafte Ausgestaltungen werden in Verbindung mit den Unteransprüchen beansprucht.

Gemäß einer vorteilhaften Ausgestaltung kann zwischen dem zu bewegenden Objekt und der hydraulischen Übersetzungseinrichtung ein Federsystem mit dessen Federkraft entgegen der vertikalen Druckkraft der hydraulischen Übersetzungseinrichtung wirken. Entsprechend wird der Hub mehrerer Piezoaktoren über eine gemeinsame Hydraulik auf das Federsystem gegeben, um so das Objekt anzuheben.

Gemäß einer weiteren vorteilhaften Ausgestaltung kann die hydraulische Übersetzeinrichtung an der Wirkseite jedes Piezoaktors jeweils einen beweglichen Piezoaktorbalg aufweisen, wobei alle Piezoaktorbalge eine gemeinsame Flüssigkeit beinhalten, die mittels eines Leitungssystems zu und in einen vertikal beweglichen und die vertikale Druckkraft bereitstellenden Zentralbalg transportierbar ist.

Gemäß einer weiteren vorteilhaften Ausgestaltung kann das Leitungssystem aus den Piezoaktorbalgen heraus verlaufende Leitungsabschnitte zu einer gemeinsamen Vertikalleitung zum Zentralbalg verbinden.

Gemäß einer weiteren vorteilhaften Ausgestaltung können die Piezoaktoren, die Piezoaktorbalgen, das Leitungssystem und der Zentralbalg symmetrisch zu einer vertikalen Hauptsymmetrieachse der gemeinsamen Vertikalleitung ausgebildet sein.

Gemäß einer weiteren vorteilhaften Ausgestaltung können die Piezoaktoren sich im Wesentlichen entlang zweier horizontalen Ebenen deckungsgleich aufeinanderliegend erstrecken und insbesondere vier Piezoaktoren ausgebildet sein.

Gemäß einer weiteren vorteilhaften Ausgestaltung können die Piezoaktoren mit dem dazugehörigen Piezoaktorbalg zwischen einer äußeren Haltehülse und einer inneren Haltehülse fixiert sein, die zur vertikalen Hauptsymmetrieachse rotationssymmetrisch sind, wobei die aus dem Piezoaktorbalgen heraus verlaufenden Leitungsabschnitte sich horizontal und durch die innere Haltehülse hindurch erstrecken.

Gemäß einer weiteren vorteilhaften Ausgestaltung kann das Federsystem ein sich im Wesentlichen horizontal erstreckendes erstes Federelement aufweisen, das auf einem oberen ebenen Ende der inneren Haltehülse gelagert ist, wobei die innere Haltehülse höher als die äußere Haltehülse ist.

Gemäß einer weiteren vorteilhaften Ausgestaltung kann das zu bewegende Objekt auf einem oberen ebenen Ende einer zur vertikalen Hauptsymmetrieachse rotationssymmetrischen Haupthaltehülse aufliegen, die unter dem zu bewegenden Objekt das erste Federelement umfasst und daran fixiert ist.

Gemäß einer weiteren vorteilhaften Ausgestaltung kann das Federsystem ein sich im Wesentlichen horizontal erstreckendes zweites Federelement aufweisen, das unterhalb der Piezoaktoren mittels der inneren Haltehülse gelagert und von der Haupthaltehülse umfasst und daran fixiert ist.

Gemäß einer weiteren vorteilhaften Ausgestaltung können das erste und das zweite Federelement rotationssymmetrisch zur vertikalen Hauptsymmetrieachse sein und insbesondere Federringe, insbesondere Chromfederringe oder Membranfedern sein.

Gemäß einer weiteren vorteilhaften Ausgestaltung kann der Zentralbalg mittels eines zwischen diesem und dem ersten Federelement angeordnetem Hubübertragungselement, insbesondere eines zur vertikalen Hauptsymmetrieachse symmetrischen Bügels, die vertikale Druckkraft auf das erste Federelement übertragen.

Gemäß einer weiteren vorteilhaften Ausgestaltung kann das zu bewegende Objekt eine Chuckplatte oder eine Trägerplatte sein.

Gemäß einer weiteren vorteilhaften Ausgestaltung können die Piezoaktoren für die Aktivierung einzeln und beliebig kombinierbar mittels einer Steuereinrichtung angesteuert werden.

Die Erfindung wird anhand von Ausführungsbeispielen in Verbindung mit den Figuren näher beschrieben. Es zeigen:
- Figur 1: ein erstes Ausführungsbeispiel einer erfindungsgemäßen Vorrichtung;
- Figur 2: ein zweites Ausführungsbeispiel einer erfindungsgemäßen Vorrichtung; und
- Figur 3: ein Ausführungsbeispiel eines erfindungsgemäßen Verfahrens.

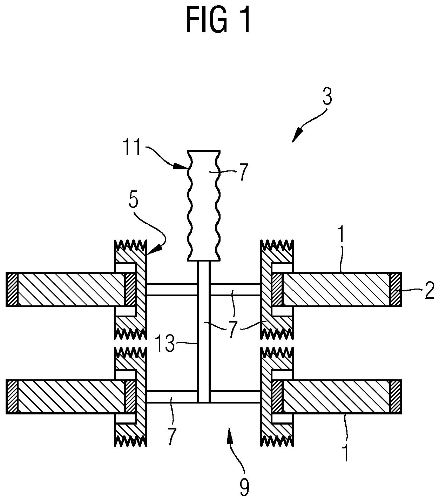

Figur 1 zeigt ein erstes Ausführungsbeispiel einer erfindungsgemäßen Vorrichtung. Eine Mehrzahl von bei einer Aktivierung in horizontale Richtungen sich ausdehnende und dabei an einer Wirkseite Druckkräfte erzeugende Piezoaktoren 1 sind dargestellt. Diese Piezoaktoren 1 sind hier eingehaust beziehungsweise sind in einem Gehäuse 2 angeordnet. Eine hydraulische Übersetzungseinrichtung 3 wandelt die Druckkräfte der Piezoaktoren 1 in eine vertikale Druckkraft zum Bewegen des Objektes entgegen der Schwerkraftrichtung um. Die hydraulische Übersetzungseinrichtung 3 weist an der Wirkseite jedes Piezoaktors 1 jeweils einen beweglichen Piezoaktorbalg 5 auf, wobei alle Piezoaktorbälge 5 eine gemeinsame Flüssigkeit 7 beinhalten, die mittels eines Leitungssystems 9 zu und in einen vertikal beweglichen und die vertikale Druckkraft bereitstellenden Zentralbalg 11 bei einer Aktivierung transportieren. Das Leitungssystem 9 verbindet aus den Piezoaktorbalgen 5 horizontal heraus verlaufende Leitungsabschnitte mit einer gemeinsamen Vertikalleitung, die in den Zentralbalg verläuft. Die Piezoaktoren 1, die Piezoaktorbalgen 5, das Leitungssystem 9 und der Zentralbalg 11 sind symmetrisch zu einer vertikalen Hauptsymmetrieachse der gemeinsamen Vertikalleitung 13 geschaffen. Gemäß der Ausführungsform gemäß Figur 1 erstrecken sich die Piezoaktoren 1 im Wesentlichen entlang zweier horizontaler Ebenen deckungsgleich aufeinanderliegend. Beispielsweise können vier Piezoaktoren 1 vorgesehen sein. Figur 1 zeigt ein Piezoaktorsystem mit einer hydraulischen Übersetzung.

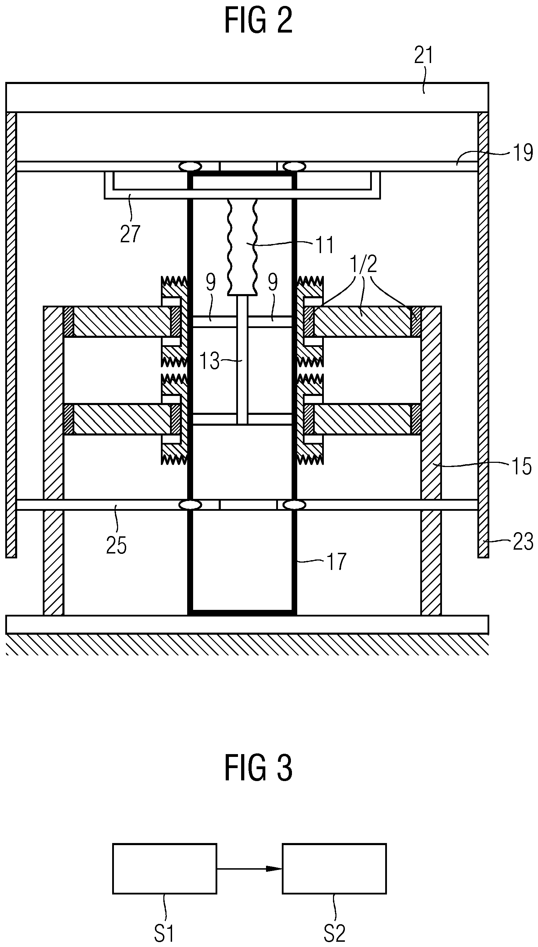

Figur 2 zeigt ein zweites Ausführungsbeispiel einer erfindungsgemäßen Vorrichtung. Dabei sind die Bestandteile der Figur 1 vollständig in der Darstellung gemäß Figur 2 enthalten. Gleiche Bezugszeichen bezeichnen gleiche strukturelle Merkmale. Gemäß Figur 2 sind die Piezoaktoren 1 mit dem jeweils dazugehörigen Piezoaktorbalg 5 zwischen einer äußeren Haltehülse 15 und einer inneren Haltehülse 17 fixiert, die zu einer vertikalen Hauptsymmetrieachse der gemeinsamen Vertikalleitung 13 rotationssymmetrisch sind. Die aus dem Piezoaktorbalgen 5 heraus verlaufenden Leitungsabschnitte erstrecken sich horizontal und durchdringen die innere Haltehülse 17. Das Federsystem weist ein sich im Wesentlichen horizontal erstreckendes erstes Federelement 19 auf, das auf einem oberen Ende der inneren Haltehülse 17 gelagert ist, wobei die innere Haltehülse 17 höher als die äußere Haltehülse 15 ist. Das zu bewegende Objekt ist hier eine Trageplatte 21, die auf einem oberen Ende einer zur vertikalen Hauptsymmetrieachse rotationssymmetrischen Haupthaltehülse 23 aufliegt, die unter dem zu bewegenden Objekt das erste Federelement 19 umfasst und daran fixiert ist. Zusätzlich weist das Federsystem ein sich im Wesentlichen horizontal erstreckendes zweites Federelement 25 auf, das unterhalb der Piezoaktoren 1 mittels der inneren Haltehülse 17 gelagert und von der Haupthaltehülse 23 umfasst und daran fixiert ist. Das erste und das zweite Federelement 19, 25 sind hier als Federringe ausgeführt. Alternativ können die Federelemente als Membranfedern ausgeführt sein. Der Zentralbalg 11 überträgt die vertikale Druckkraft auf das erste Federelement 19 mittels eines zwischen dem Zentralbalg 11 und dem ersten Federelement 19 angeordneten zur vertikalen Hauptsymmetrieachse symmetrischen Bügels 27. Die Piezoaktoren 1 sind für die Aktivierung einzeln und beliebig kombinierbar mittels einer Steuereinrichtung ansteuerbar. Die Trageplatte 21 kann alternativ eine Chuckplatte sein. Die Federringe des ersten Federelements 19 und des zweiten Federelements 25 bewirken eine geführte Auslenkung entgegen der Schwerkraftrichtung bei Aktivierung der Piezoaktoren. Der Bügel 27 ermöglicht eine gleichmäßige Hubübertragung zwischen dem Zentralbalg 11 und dem Federring des ersten Federelements 19. Der mit der Flüssigkeit 7 gefüllte Zentralbalg 11 kann als hydraulischer Übersetzer wirken. Die horizontalen Leitungen und die Vertikalleitung 13 ermöglichen einen Transport der Flüssigkeit 7 zwischen den Piezoaktorbalgen 5 und dem Zentralbalg 11. Die Piezoaktoren 1 können jeweils eingehaust sein. Die Haltehülsen können ebenso als Halteringe ausgeführt sein. Mittels der inneren Haltehülse 17 können innere Federelementlagerungen bereitgestellt werden. Die Haupthaltehülse 23 kann als Halterung für das erste Federelement 19 und das zweite Federelement 25 und der Trägerplatte 21 verwendet werden. Figur 2 zeigt einen Vertikalantrieb beispielsweise für eine Chuckplatte. Diese kann beispielsweise bei einer Fertigung von elektronischen Bauelementen und Geräten verwendet werden.

Figur 3 zeigt ein Ausführungsbeispiel eines erfindungsgemäßen Verfahrens. Mit einem ersten Schritt S1 erfolgt ein Aktivieren einer Mehrzahl von in Richtungen sich ausdehnenden und dabei an einer Werkseite Druckkräfte erzeugenden Piezoaktoren. Mit einem zweiten Schritt S2 erfolgt ein Bewegen eines Objektes entgegen der Schwerkraftrichtung mittels Wandeln und Übersetzen der Druckkräfte der Piezoaktoren in eine vertikale Druckkraft mittels einer hydraulischen Übersetzungseinrichtung. Zur Bereitstellung einer geführten Auslenkung wirkt die vertikale Druckkraft der hydraulischen Übersetzungseinrichtung gegen ein Federsystem. Es erfolgt damit ein schnelles Anheben des Objektes nach dem die vertikale anhebende Druckkraft größer als die entgegengesetzt wirkende Federkraft des Federsystems ist. Bei Überschreiten eines entsprechenden Schwellenwertes wird das Objekt mit einer großen Geschwindigkeit angehoben.

Die vorliegende Erfindung betrifft eine Vorrichtung und ein Verfahren zum Bewegen eines Objektes in einer vertikalen Richtung, aufweisend eine Mehrzahl von bei einer Aktivierung in Richtung und sich ausdehnenden und dabei an einer Wirkseite Druckkräfte erzeugenden Piezoaktoren 1 und eine hydraulische Übersetzungseinrichtung 3 die die Druckkräfte der Piezoaktoren in eine vertikale Druckkraft zum Bewegen des Objektes entgegen der Schwerkraftrichtung wandelt und mit einem Übersetzungsverhältnis übersetzt. Ein Anheben des Objektes erfolgt nachdem die vertikale Druckkraft eine entgegenwirkende Federkraft eines Federsystems überschritten hat.

## Patentansprüche

1. Vorrichtung zum Bewegen eines Objektes in einer vertikalen Richtung, aufweisend
- eine Mehrzahl von bei einer Aktivierung in Richtungen sich ausdehnenden und dabei an einer Wirkseite Druckkräfte erzeugenden Piezoaktoren (1);
- eine hydraulische Übersetzungseinrichtung (3), die die Druckkräfte der Piezoaktoren in eine vertikale Druckkraft zum Bewegen des Objektes entgegen der Schwerkraftrichtung wandelt und mit einem Übersetzungsverhältnis übersetzt,
**dadurch gekennzeichnet, dass** die hydraulische Übersetzungseinrichtung an der Wirkseite jedes Piezoaktors jeweils einen beweglichen Piezoaktorbalg (5) aufweist, die alle eine gemeinsame Flüssigkeit (7) beinhalten, die mittels eines Leitungssystems (9) zu und in einen vertikal beweglichen und die vertikale Druckkraft bereitstellenden Zentralbalg (11) transportierbar ist.

2. Vorrichtung nach Anspruch 1, **dadurch gekennzeichnet, dass** zwischen dem zu bewegenden Objekt und der hydraulischen Übersetzungseinrichtung ein Federsystem mit dessen Federkraft entgegen der vertikalen Druckkraft der hydraulischen Übersetzungseinrichtung wirkt.

3. Vorrichtung nach Anspruch 2, **dadurch gekennzeichnet, dass** das Leitungssystem aus den Piezoaktorbalgen heraus verlaufende Leitungsabschnitte zu einer gemeinsamen Vertikalleitung (13) zum Zentralbalg verbindet.

4. Vorrichtung nach Anspruch 3, **dadurch gekennzeichnet, dass** die Piezoaktoren, die Piezoaktorbalgen, das Leitungssystem und der Zentralbalg symmetrisch zu einer vertikalen Hauptsymmetrieachse der gemeinsamen Vertikalleitung ausgebildet sind.

5. Vorrichtung nach Anspruch 4, **dadurch gekennzeichnet, dass** die Piezoaktoren sich im Wesentlichen entlang zweier horizontalen Ebenen deckungsgleich aufeinander liegend erstrecken und insbesondere vier Piezoaktoren ausgebildet sind.

6. Vorrichtung nach einem der vorhergehenden Ansprüche 4 oder 5, **dadurch gekennzeichnet, dass** die Piezoaktoren mit dem dazugehörigen Piezoaktorbalg zwischen einer äußeren Haltehülse (15) und einer inneren Haltehülse (17) fixiert sind, die zur vertikalen Hauptsymmetrieachse rotationssymmetrisch sind, wobei die aus den Piezoaktorbalgen heraus verlaufenden Leitungsabschnitte sich horizontal und durch die innere Haltehülse hindurch erstrecken.

7. Vorrichtung nach Anspruch 6, **dadurch gekennzeichnet, dass** das Federsystem ein sich im Wesentlichen horizontal erstreckendes erstes Federelement (19) aufweist, das auf einem oberen ebenen Ende der inneren Haltehülse gelagert ist, wobei die innere Haltehülse höher als die äußere Haltehülse ist.

8. Vorrichtung nach Anspruch 7, **dadurch gekennzeichnet, dass** das zu bewegende Objekt auf einem oberen ebenen Ende einer zur vertikalen Hauptsymmetrieachse rotationssymmetrischen Haupthaltehülse (23) aufliegt, die unter dem zu bewegenden Objekt das erste Federelement umfasst und daran fixiert ist.

9. Vorrichtung nach Anspruch 8, **dadurch gekennzeichnet, dass** das Federsystem ein sich im Wesentlichen horizontal erstreckendes zweites Federelement (25) aufweist, das unterhalb der Piezoaktoren mittels der inneren Haltehülse gelagert und von der Haupthaltehülse umfasst und daran fixiert ist.

10. Vorrichtung nach einem der vorhergehenden Ansprüche 7 oder 9, **dadurch gekennzeichnet, dass** das erste und/oder das zweite Federelement rotationssymmetrisch zur vertikalen Hauptsymmetrieachse sind/ist und insbesondere Federringe/ein Federring, insbesondere Kronfederringe/ein Kronfederring, oder Membranfedern/eine Membranfeder sind/ist.

11. Vorrichtung nach Anspruch 7 oder 10, **dadurch gekennzeichnet, dass** der Zentralbalg mittels eines zwischen diesem und dem ersten Federelement angeordneten Hubübertragungselements, insbesondere eines zur vertikalen Hauptsymmetrieachse symmetrischen Bügels (27), die vertikale Druckkraft auf das erste Federelement überträgt.

12. Vorrichtung nach einem der vorhergehenden Ansprüche 1 bis 11, **dadurch gekennzeichnet, dass** das zu bewegende Objekt eine Chuckplatte oder Trägerplatte (21) ist.

13. Vorrichtung nach einem der vorhergehenden Ansprüche 1 bis 12, **dadurch gekennzeichnet, dass** die Piezoaktoren für die Aktivierung einzeln und kombinierbar mittels einer Steuereinrichtung ansteuerbar sind.

14. Verfahren zum Bewegen eines Objektes in einer vertikalen Richtung mittels einer Vorrichtung nach einem der vorhergehenden Ansprüche, mit den Schritten
- Aktivieren einer Mehrzahl von in Richtungen sich ausdehnenden und dabei an einer Wirkseite Druckkräfte erzeugenden Piezoaktoren;
- Bewegen des Objektes entgegen der Schwerkraftrichtung mittels Wandeln und Übersetzen der Druckkräfte der Piezoaktoren in eine vertikale Druckkraft mittels einer hydraulische Übersetzungseinrichtung, **dadurch gekennzeichnet, dass** die hydraulische Übersetzungseinrichtung an der Wirkseite jedes Piezoaktors jeweils einen beweglichen Piezoaktorbalg aufweist, wobei alle Piezoaktorbalge eine gemeinsame Flüssigkeit beinhalten, die mittels eines Leitungssystems zu und in einen vertikal beweglichen und die vertikale Druckkraft bereitstellenden Zentralbalg transportiert wird.

15. Verfahren nach Anspruch 14, **dadurch gekennzeichnet, dass** zwischen dem zu bewegenden Objekt und der hydraulischen Übersetzungseinrichtung ein Federsystem mit dessen Federkraft entgegen der vertikalen Druckkraft der hydraulischen Übersetzungseinrichtung wirkt.

16. Verfahren nach Anspruch 14 oder 15, **dadurch gekennzeichnet, dass** der Zentralbalg mittels eines zwischen diesem und dem ersten Federelement angeordneten Hubübertragungselements, insbesondere eines zur vertikalen Hauptsymmetrieachse symmetrischen Bügels, die vertikale Druckkraft auf das erste Federelement überträgt.

17. Verfahren nach einem der vorhergehenden Ansprüche 14 bis 16, **dadurch gekennzeichnet, dass** die Piezoaktoren für die Aktivierung einzeln und kombinierbar mittels einer Steuereinrichtung ansteuert werden.

18. Verwendung einer Vorrichtung nach einem der vorhergehenden Ansprüche 10 bis 13 oder eines Verfahrens nach einem der vorhergehenden Ansprüche 14 bis 17 zum Bewegen eines eine Masse von 100 bis 1000 g aufweisenden Objekts in einer vertikalen Richtung entgegen der Schwerkraftrichtung mit einem Hub von 0,5 bis 5 mm innerhalb von 1 bis 10 ms mit einer Positionierungenauigkeit kleiner 10 µm.

## Claims

1. Apparatus for moving an object in a vertical direction, having
- a plurality of piezo actuators (1) that expand in directions upon activation and in the process generate pressure forces on an active side;
- a hydraulic transmission device (3) which converts the pressure forces of the piezo actuators into a vertical pressure force for moving the object counter to the direction of gravity and transmits said pressure forces with a transmission ratio,
**characterized in that** the hydraulic transmission device has in each case a movable piezo actuator bellows (5) on the active side of each piezo actuator, all of said piezo actuator bellows (5) containing a common fluid (7) which is transportable by means of a line system (9) to and into a vertically movable central bellows (11) that provides the vertical pressure force.

2. Apparatus according to Claim 1, **characterized in that** a spring system acts between the object to be moved and the hydraulic transmission device with its spring force counter to the vertical pressure force of the hydraulic transmission device.

3. Apparatus according to Claim 2, **characterized in that** the line system connects line portions extending out of the piezo actuator bellows to a common vertical line (13) to the central bellows.

4. Apparatus according to Claim 3, **characterized in that** the piezo actuators, the piezo actuator bellows, the line system and the central bellows are configured symmetrically to a vertical main axis of symmetry of the common vertical line.

5. Apparatus according to Claim 4, **characterized in that** the piezo actuators extend substantially along two horizontal planes in a manner located congruently on one another, and in particular four piezo actuators are formed.

6. Apparatus according to one of the preceding Claims 4 or 5, **characterized in that** the piezo actuators are fixed with the associated piezo actuator bellows between an outer retaining sleeve (15) and an inner retaining sleeve (17), said retaining sleeves (15, 17) being rotationally symmetrical to the vertical main axis of symmetry, wherein the line portions extending out of the piezo actuator bellows extend horizontally and through the inner retaining sleeve.

7. Apparatus according to Claim 6, **characterized in that** the spring system has a substantially horizontally extending first spring element (19) which is mounted on an upper planar end of the inner retaining sleeve, wherein the inner retaining sleeve is higher than the outer retaining sleeve.

8. Apparatus according to Claim 7, **characterized in that** the object to be moved rests on an upper planar end of a main retaining sleeve (23) that is rotationally symmetrical to the vertical main axis of symmetry, said main retaining sleeve (23) comprising and being fixed to the first spring element under the object to be moved.

9. Apparatus according to Claim 8, **characterized in that** the spring system has a substantially horizontally extending second spring element (25) which is mounted beneath the piezo actuators by means of the inner retaining sleeve and is comprised by and fixed to the main retaining sleeve.

10. Apparatus according to one of the preceding Claims 7 or 9, **characterized in that** the first and/or the second spring element is/are rotationally symmetrical to the vertical main axis of symmetry and is/are in particular spring rings/a spring ring, in particular chrome spring rings/a chrome spring ring or diaphragm springs/a diaphragm spring.

11. Apparatus according to Claim 7 or 10, **characterized in that** the central bellows transfers the vertical pressure force to the first spring element by means of a stroke transfer element arranged between said central bellows and the first spring element, in particular by means of a bracket (27) symmetrical to the vertical main axis of symmetry.

12. Apparatus according to one of the preceding Claims 1 to 11, **characterized in that** the object to be moved is a chuck plate or carrier plate (21).

13. Apparatus according to one of the preceding Claims 1 to 12, **characterized in that**, for activation, the piezo actuators are controllable individually and in a combinable manner by means of a control device.

14. Method for moving an object in a vertical direction by means of a device according to one of the preceding claims, having the steps of
- activating a plurality of piezo actuators that expand in directions and in the process generate pressure forces on an active side;
- moving the object counter to the direction of gravity by means of converting and transmitting the pressure forces of the piezo actuators into a vertical pressure force by means of a hydraulic transmission device,
**characterized in that**
the hydraulic transmission device has in each case a movable piezo actuator bellows on the active side of each piezo actuator, wherein all of the piezo actuator bellows contain a common fluid which is transportable by means of a line system to and into a vertically movable central bellows that provides the vertical pressure force.

15. Method according to Claim 14, **characterized in that** a spring system acts between the object to be moved and the hydraulic transmission device with its spring force counter to the vertical pressure force of the hydraulic transmission device.

16. Method according to Claim 14 or 15, **characterized in that** the central bellows transfers the vertical pressure force to the first spring element by means of a stroke transfer element arranged between said central bellows and the first spring element, in particular by means of a bracket symmetrical to the vertical main axis of symmetry.

17. Method according to one of the preceding Claims 14 to 16, **characterized in that**, for activation, the piezo actuators are controlled individually and in a combinable manner by means of a control device.

18. Use of an apparatus according to one of the preceding Claims 10 to 13 or of a method according to one of the preceding Claims 14 to 17 for moving an object having a mass of 100 to 1000 g in a vertical direction counter to the direction of gravity with a stroke of 0.5 to 5 mm within 1 to 10 ms with a positioning inaccuracy of less than 10 µm.

## Revendications

1. Dispositif de déplacement d'un objet dans une direction verticale, comportant
- une pluralité d'actionneurs (1) piézoélectriques s'étendant lors d'une activation dans des directions et produisant des forces de poussée sur un côté actif ;
- un dispositif (3) hydraulique de démultiplication, qui transforme les forces de poussée des actionneurs piézoélectriques en une force de poussée verticale pour déplacer l'objet à l'encontre du sens de la force de gravité et les démultiplie suivant un rapport de démultiplication,
**caractérisé en ce que** le dispositif hydraulique de démultiplication a, sur le côté actif de chaque actionneur piézoélectrique, respectivement un soufflet (5) mobile d'actionneur piézoélectrique, qui comportent tous un liquide (7) commun, lequel, au moyen d'un système (9) de conduite, peut être transporté vers et dans un soufflet (11) central, mobile verticalement et mettant à disposition la force de poussée verticale.

2. Système suivant la revendication 1, **caractérisé en ce qu'**entre l'objet à déplacer et le dispositif hydraulique de démultiplication, agit un système de ressort, dont la force est contraire à la force de poussée verticale du dispositif hydraulique de démultiplication.

3. Système suivant la revendication 2, **caractérisé en ce que** le système de conduite met en communication des tronçons de conduit partant des soufflets des actionneurs piézoélectriques avec un conduit (13) vertical commun menant au soufflet central.

4. Système suivant la revendication 3, **caractérisé en ce que** les actionneurs piézoélectriques, les soufflets des actionneurs piézoélectriques, le système de conduite et le soufflet central sont constitués symétriquement par rapport à un axe de symétrie principal vertical du conduit vertical commun.

5. Système suivant la revendication 4, **caractérisé en ce que** les actionneurs piézoélectriques s'étendent en étant les uns sur les autres en coïncidence sensiblement suivant deux plans horizontaux et sont constitués notamment de quatre actionneurs piézoélectriques.

6. Système suivant l'une des revendications précédentes 4 ou 5, **caractérisé en ce que** les actionneurs piézoélectriques, avec le soufflet d'actionneur piézoélectrique associé, sont immobilisés entre un manchon (15) extérieur de maintien et un manchon (17) intérieur de maintien, qui sont de révolution par rapport à l'axe de symétrie principal vertical, les tronçons de conduit, partant des soufflets d'actionneur piézoélectriques, s'étendant horizontalement et passant à travers le manchon de maintien intérieur.

7. Système suivant la revendication 6, **caractérisé en ce que** le système de ressort a un premier élément (19) de ressort s'étendant sensiblement horizontalement et monté sur une extrémité plane supérieure du manchon de maintien intérieur, le manchon de maintien intérieur étant plus haut que le manchon de maintien extérieur.

8. Système suivant la revendication 7, **caractérisé en ce que** l'objet à déplacer repose sur une extrémité plane supérieure d'un manchon (23) de maintien principal, de révolution par rapport à l'axe de symétrie principal vertical, qui entoure, sous l'objet à déplacer, le premier élément de ressort et y est immobilisé.

9. Système suivant la revendication 8, **caractérisé en ce que** le système de ressort a un deuxième élément (25) de ressort, qui s'étend sensiblement horizontalement, qui est monté en dessous des actionneurs piézoélectrique au moyen du manchon de maintien intérieur et qui est entouré du manchon de maintien principal et y est immobilisé.

10. Système suivant l'une des revendications précédentes 7 ou 9, **caractérisé en ce que** le premier et/ou le deuxième élément de ressort sont/est de révolution par rapport à l'axe de symétrie principal vertical et sont/est notamment des anneaux ressort/un anneau ressort, notamment des anneaux ressort couronne/un anneau ressort couronne ou des ressort à membrane/un ressort à membrane.

11. Système suivant la revendication 7 ou 10, **caractérisé en ce que** le soufflet central transmet, au moyen d'un élément de transmission de course disposé entre celui-ci et le premier élément de ressort, notamment d'un étrier (27) symétrique par rapport à l'axe de symétrie principal vertical, la force de poussée verticale au premier élément de ressort.

12. Système suivant l'une des revendications précédentes 1 à 11, **caractérisé en ce que** l'objet à déplacer est un plateau chuck ou une plaquette (21) à circuit imprimé.

13. Système suivant l'une des revendications précédentes 1 à 12, **caractérisé en ce que** les actionneurs piézoélectriques peuvent être commandés individuellement pour l'activation et combinés au moyen d'un dispositif de commande.

14. Procédé de déplacement d'un objet dans une direction verticale au moyen d'un système suivant l'une des revendications précédentes, comprenant les stades
- activation d'une pluralité d'actionneurs piézoélectriques s'allongeant dans des directions et produisant ainsi des forces de poussée sur un côté actif ;
- déplacement de l'objet à l'encontre du sens de la force de gravité au moyen de transformations et de démultiplications des forces de poussée des actionneurs piézoélectriques en une force de poussée verticale, à l'aide d'un dispositif hydraulique de démultiplication, **caractérisé en ce que**
le dispositif hydraulique de démultiplication a, du côté actif de chaque actionneur piézoélectrique, respectivement un soufflet mobile d'actionneur piézoélectrique, tous les soufflets d'actionneur piézoélectrique contenant un liquide commun, qui, au moyen d'un système de conduite, est transporté vers et dans un soufflet central mobile verticalement et mettant à disposition la force de poussée verticale.

15. Procédé suivant la revendication 14, **caractérisé en ce qu'**entre l'objet à déplacer et le dispositif hydraulique de démultiplication, agit un système de ressort, dont la force est contraire à la force de poussée verticale du dispositif hydraulique de démultiplication.

16. Procédé suivant la revendication 14 ou 15, **caractérisé en ce que** le soufflet central transmet, au moyen d'un élément de transmission de course disposé entre celui-ci et le premier élément de ressort, notamment d'un étrier (27) symétrique par rapport à l'axe de symétrie principal vertical, la force de poussée verticale au premier élément de ressort.

17. Procédé suivant l'une des revendications précédentes 14 à 16, **caractérisé en ce que** les actionneurs piézoélectriques peuvent être commandés individuellement pour l'activation et combinés au moyen d'un dispositif de commande.

18. Utilisation d'un système suivant l'une des revendications précédentes 10 à 13 ou d'un procédé suivant l'une des revendications précédentes 14 à 17 pour déplacer un objet ayant une masse de 100 à 1000 g dans un sens vertical opposé au sens de la force de gravité, en ayant une course de 0,5 à 5 mm en 1 à 10 ms à une précision de position plus petite que 10 µm.
